# FASCICULE DE BREVET EUROPEEN

(11) **EP 0 398 946 B1**
(45) Date de publication et mention de la délivrance du brevet: **20.01.1993**
(21) Numéro de dépôt: 89902053.1
(22) Date de dépôt: 02.02.1989
(51) Int. Cl.: A21B 7/00, A21B 3/07

(54) **DISPOSITIF DE CUISSON ET DE REFROIDISSEMENT A SECTEUR DE CUISSONS MULTIPLES AVEC INTRODUCTIONS ET EVACUATIONS AUTONOMES ET AUTOMATISEES**
KOCH- UND KÜHLVORRICHTUNG MIT MEHREREN KOCHZONEN MIT UNABHÄNGIGEN UND AUTOMATISCHEN ZU- UND ABFUHRVORRICHTUNGEN
DEVICE FOR COOKING AND REFRIGERATING FOOD, HAVING A MULTIPLE COOKING SECTOR WITH INDEPENDENT AUTOMATIC INTRODUCTION AND REMOVAL

(30) Priorité: 04.02.1988 FR 8801421
(43) Date de publication de la demande: 28.11.1990
(73) Titulaire: GRANDI, René, F-38300 Bourgoin-Jallieu (FR)
(72) Inventeur: GRANDI, René, F-38300 Bourgoin-Jallieu (FR)
(74) Mandataire: Roman, Michel
(86) Numéro de dépôt international: FR8900035
(87) Numéro de publication internationale: WO8906905

(56) Documents cités:
- FR-A- 2 450 672
- FR-A- 2 596 250
- US-A- 3 092 270
- US-A- 3 821 925

## Description

Il est connu des dispositifs permettant de sélectionner à volonté l'introduction et l'évacuation des produits contenus dans des bacs, paniers, etc... des unités de cuisson et de refroidissement. Mais l'introduction et l'évacuation des produits dans ces dispositifs sont effectués par un seul robot ou automate, faisant ses manipulations les unes à la suite des autres.

Pour d'autres dispositifs, la cuisson et la réfrigération s'effectuant dans un tunnel, l'introduction ne pouvant se faire que l'un derrière l'autre, ainsi que pour l'évacuation. Ceci ayant pour principal inconvénient de ne pas pouvoir mélanger les produits, ayant un temps de traitement différent les uns des autres. Le produits devant être traités par famille de cuisson, les unes après les autres. Car dans ces dispositifs, les bacs de produits se suivant, ils ne peuvent également être évacués que les uns après les autres.

C'est ainsi que par cet inconvénient, certains produits sont trop cuits, et également pour la réfrigération dont l'excès de froid en détruira toute la qualité gustative. Pour ces dispositifs, le chargement et le déchargement étant faits par un seul robot, les manutentions sont plus lentes, et nécessitent une certaine attente.

Le brevet US-A-3 821 925 décrit un dispositif de cuisson avec introduction et évacuation des paniers contenant les produits à traiter. Le dispositif est composé de deux parties : une partie basse et un couvercle venant coiffer cette partie basse servant à traiter en chaud les produits, le couvercle étant mobile pour permettre l'évacuation et l'introduction d'un panier solidaire dudit couvercle et contenant les produits à traiter. Ce dispositif, conçu pour la friture sous pression, ne permet pas des temps de cuisson différents dans la même enceinte ni le refroidissement et ne se prète pas à l'automatisation des opérations d'introduction et d'évacuation des produits à traiter.

Le brevet FR-A-2 596 250 décrit un dispositif destiné à la cuisson des pâtes alimentaires. Il comporte un bac de cuisson et plusieurs nacelles recevant des paniers contenant les pâtes à cuire. L'immersion de chaque nacelle est commandée automatiquement en mouvement et en durée. Cet appareil est dépourvu de couvercle ce qui ne permet pas l'évacuation des gaz de cuisson et conduit à un rendement thermique médiocre.

Le dispositif qui va être décrit évite tous ces inconvénients. Il est constitué en deux parties : une partie basse, réceptionnant les produits à traiter, et une partie haute, venant coiffer la partie basse, et lui servant de hotte et de couvercle.

Pour le dispositif de cuisson, la partie basse est constituée d'une cuve, ou de plusieurs cuves côte à côte. Plusieurs types de cuisson pouvant être utilisés : vapeur fluente, vapeur surchauffée, air pulsé, chaleur lente, en eau immergée, et également la cuisson à l'huile de type friteuse.

Plusieurs dispositifs peuvent être ajoutés en modules, les uns après les autres. Et chaque module, ayant son couvercle équipé d'un système d'introduction et d'évacuation autonome. Mais, ce système, pour des mesures d'économies, pouvant être commun à tous les modules.

Pour permettre l'introduction et l'évacuation des produits à cuire ou à refroidir, ce système de monte et baisse, soulève la hotte-couvercle, à l'aide d'une vis sans fin, ou par une chaîne asservie d'un vérin électrique, ou par un enrouleur, ou bien pat tout autre moyen, fixé sur une rampe. La hotte-couvercle étant solidaire au système de monte et baisse, et étant en position levée, elle permet de dégager la cuve de traitement en chaud ou en froid, et ainsi permet également l'introduction et l'évacuation des paniers contenant les produits. Ces paniers sont introduits ou évacués par un bras-robot coulissant sur une vis sans fin transversale fixée sous la hotte-couvercle, se levant et se baissant avec celui-ci.

La vis sans fin transversale permettant d'introduire les paniers dans la cuve, ou de les évacuer sur un convoyeur extérieur. Plusieurs bras peuvent cotoyer, selon le nombre de cuves, ils sont motorisés et commandés sur un pupitre extérieur. Dans la cuve où les produits ont terminé leur traitement, la fourche du bras vient crocheter le panier, et la hotte-couvercle effectue sa montée, pour laisser le panier s'évacuer à l'extérieur, par le bras coulissant sur sa vis sans fin. Seul le bras-robot qui aura reçu l'ordre par un contacteur situé sur sa fourche, crochètera le panier et l'évacuera, les paniers nons crochetés resteront dans leur zone en finition et de traitement. Pour l'introduction des paniers, un contacteur placé sur le convoyeur signale à la hotte-couvercle l'élévation, et au bras-robot de venir saisir le panier. Par la non présence du panier le bras-robot ne pourra pas fonctionner.

Un contacteur de fin de course sur la vis sans fin du bras-robot, centrera le panier dans la cuve. De même pour le monte et baisse, une came-contacteur, viendra commander la fonction d'ouverture ou de fermeture de la hotte-couvercle.

Afin de permettre le passage avec aisance du bras porteur avec sa fourche, prenant ou déposant le panier du convoyeur, ou bien même d'un chariot à niveau constant, une porte guillotine ou bien basculante, motorisée ou pas, vient s'ouvrir simultanément à l'avancée du bras-robot porteur. Le convoyeur d'amener ou d'évacuation des paniers, peut ne pas être utilisé, suivant la nécessité.

Pendant le relevage du couvercle, sur toute la périphérie du dispositif, une jupe vient coulisser, évitant la perte des calories ou des frigories.

Un automate programmable viendra commander, actionner ou arrêter toutes les manipulations.

Au-dessus de la porte-guillotine et du convoyeur, une hotte filtrante évacue les vapeurs au moment de la sortie des produits chauds. Cette hotte étant raccordée à un conduit souple et articulé jusqu'aux gaines d'extraction arrières évacuant les vapeurs de cuisson.

En utilisant le dispositif en vapeur fluente, une clef de réglage contrôle l'évacuation des vapeurs, car celles-ci n'étant pas modulées, elles s'engouffreraient dans la hotte d'aspiration, et elles ne suffiraient plus pour cuire les produits. Pour le dispositif de froid, les gaines d'extraction ne sont pas nécessaires.

Un condenseur à air ou a eau permet de récupérer tous les condensats. Une ventilation aspirante peut être prévue pour l'évacuation des buées ou vapeurs d'huiles, ceci pour certains types de locaux. Les eaux de condensats seront évacuées par une évacuation extérieure, ou bien ils seront recyclés dans l'eau de la cuve de cuisson permettant de limiter la consommation d'eau. Sous la hotte-couvercle, des surchauffeurs électriques et une turbine surchauffent les vapeurs fluentes ou servent pour l'air pulsé ou pour la vapeur sèche. La température des surchauffeurs peut dépasser 120° afin de détruire les bactéries, salmonnelles qui ne sont pas détruites par la simple vapeur fluente qui elle se limite à environ 99°. Cette température étant insuffisante pour détruire certaines bactéries.

Pour la cuisson à air pulsé seuls les surchauffeurs sont utilisés une turbine servant à brasser cet air chaud, avec un sens d'aspiration et de refoulement.

Sur le pourtour de la hotte-couvercle, et sur le pourtour de la cuve réceptive du couvercle, un joint sur chacune des deux parties permet qu'elles viennent se fermer hermétiquement, afin de ne pas laisser échapper les vapeurs, la chaleur et le froid pour le dispositif de refroidissement.

Pour la cuisson en eau immergée, une pompe recycle l'eau de la cuve, pour supprimer les amidons et féculents, et les évacuer par un trop plein A. En vapeur fluente, un trop plein B évacue le surplus d'eau, une électro -vanne régule et contrôle le niveau de l'eau. Un robinet général permet le vidange de la cuve étant fermée par une vanne lois de la cuisson en eau immergée.

Un collecteur de graisse situé à la sortie de ces deux trop pleins vient récupérer les graisses.

Deux contacteurs, haut et bas détermineront les niveaux choisis par l'opérateur.

La cuve de cuisson est chauffée soit par le gaz, soit par des fourreaux électriques placés dans celle-ci.

Le même dispositif sera utilisé pour la liaison froide, c'est-à-dire, refroidir très rapidement des produits chauds, avant que leur température ne soit descendue au-dessous de 65°, afin de respecter les décrets-loi, et le développement des bactéries. Ce dispositif ayant le même système d'introduction et d'évacuation que celui de chaud, La réfrigération étant assurée par un compresseur de froid, ou par Co2, ou azote liquide, une ventilation adéquate vient répartir le froid dans le dispositif de façon homogène. Ce dispositif peut être accouplé à celui de chaud, avec un même convoyeur d'introduction et d'évacuation des paniers.

Entre ces deux dispositifs, une salamandre-grill, permet aux agents de manutention de gratiner, décorer, aprêter, avant que les produits ne soient introduits dans la zone de froid.

Un automate programmable permet dans ce dispositif de refroidissement, de déterminer le temps de refroidissement nécessaire à chaque produit. ces produits doivent être refroidis en moins de deux heures selon les décrets-loi. A cet effet, le compresseur et les évaporateurs, doivent être étudiés en conséquence.

Le dispositif de refroidissement, ayant des produits à temps de traitement différent, le monte et baisse et le bras-robot effectueront leur manutention comme dans le dispositif de cuisson. Chaque produit devant être évacué immédiatement après son temps de refroidissement écoulé, afin de conserver au produits toutes ses qualités gustatives et esthétiques qui sont détruites par une ventilation de froid prolongé.

Une chaîne en continu peut être envisagée avec des modules de cuisson et de refroidissement les uns à la suite des autres afin d'effectuer un travail cohérent.

Un automate programmable général vient faire la gestion de toute la chaîne.

Ce dispositif permet de cuire et de refroidir des produits, pré emballés crus et tirés au vide dans des poches plastiques, la cuisson se faisant à la vapeur plus air pulsé. Mais des produits préemballés crus dans des barquettes cartons ou aluminiums operculées, peuvent également être traités, ceci s'apparentant à la cuisson en demi-conserve, qui est couramment utilisée dans des fours à air pulsé, mais dont l'introduction et l'évacuation se fait manuellement, et un seul produit à temps de traitement unique peut être introduit, contrairement au dispositif qui vient d'être décrit.

Les dessins ci-annexés qui illustrent l'invention sont donnés à titre d'exemple non limitatif, des formes de réalisation de l'objet de cette invention.

La figure 1 représente une coupe en perspective du dispositif fermé, avec le convoyeur d'amener et d'évacuation des paniers. Dans l'éclaté du dispositif on peut voir les bras-robots avec un panier dans la cuve.

La figure 2 représente une vue de côté et en coupe du dispositif de cuisson, avec le couvercle levé et le bras-robot sortant le panier de produits.

La figure 3 montre le dispositif de cuisson fermé, avec le bras-robot ayant déposé le panier pour son traitement.

La figure 4 représente le dispositif fermé en système de réfrigération.

La figure 5 montre également une coupe de face du dispositif de refroidissement, en cours d'évacuation d'un seul panier ayant fni son traitement, l'autre panier restant, poursuit son temps de réfrigération, la fourche du bras-robot n'ayant pas reçu d'ordre, n'a pas saisi ledit panier.

La figure 6 représente une chaîne composée d'un module de cuisson et un module de refroidissement, avec un convoyeur commun, où une salamandre-grill vient gratiner les produits avant qu'ils subissent le traitement de réfrigération.

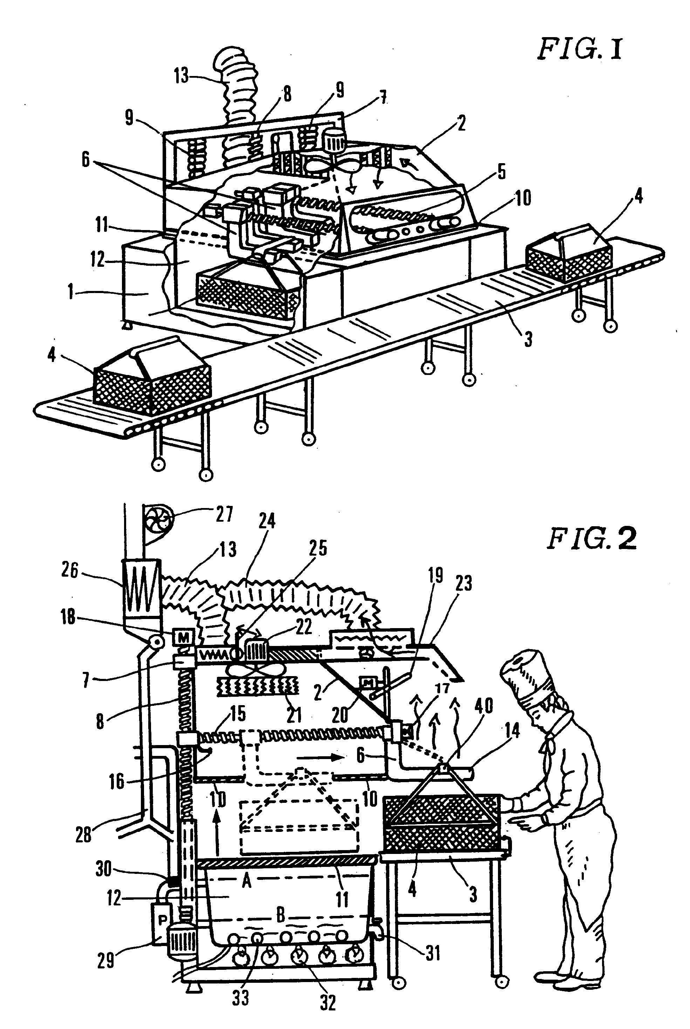

Le dispositif représenté figure 1, comporte la partie basse de traitement des produits 1, et la hotte-couvercle 2 avec un convoyeur 3 d'amener et évacuation des paniers 4. Dans l'éclaté on aperçoit les vis sans fin 6 des bras-robots 6 avec un panier 4. Une rampe 7 permet l'élévation de la hotte-couvercle 2, au moyen d'une vis sans fin verticale 8 ou de chaînes 9, le joint 10 du couvercle, et le joint 11 de la cuve 12 jointent hermétiquement les deux parties hautes et basses. Un conduit souple 13 évacue les vapeurs odeurs et graisses dégagées par les différents traitements.

La figure 2 représente le dispositif de cuisson en cours d'évacuation du panier 4, hors de la cuve 12 et venant être déposé sur le convoyeur 3, par le bras-robot 6 au moyen de sa fourche 14. Le bras-robot 6 coulisse sur une vis sans fin 15, un contacteur 16 vient arrêter la fin de course du bras-robot 6, actionné par son moteur 17.

La hotte-couvercle 2 est levée et baissée par un monte et baisse sur une rampe 7, au moyen de la vis sans fin 8 et son moteur 18.

Une porte guillotine ou basculante 19, motorisée 20 ou pas, permet le passage du bras-robot 6 afin qu'il puisse prendre ou déposer le panier 4 sur le convoyeur 3. Un contacteur 40 signale la présence du panier.

Au-dessus du convoyeur 3, une hotte filtrante 23 récupère les vapeurs des produits sortant de la cuisson, elle est raccordée par un conduit 24, jusqu'à la gaine 13 d'extraction. Une clef de réglage 25 contrôle la sortie de la vapeur fluente.

Un échangeur condenseur 26 récupère les condensats de la vapeur, qui elle est aspirée vers l'extérieur par la ventilation 27. Les eaux de condensats étant évacuées soit vers l'extérieur 28, soit elles retournent à la cuve de cuisson 12.

Les joints 10 de la hotte-couvercle et 11 de la cuve 12 jointent très hermétiquement les deux parties.

Une pompe 29 vient recycler l'eau de la cuve 12 par un niveau trop plein A, pour la cuisson en eau immergée, un trop plein B contrôle le niveau de l'eau en cuisson vapeur fluente. La régulation et le niveau de l'eau sont contrôlés par une électrovanne 30.

Un robinet 31 permet l'évacuation totale de l'eau de la cuve. Des rampes à gaz 32 ou des fourreaux électriques 33 permettent le chauffage de la cuve 12.

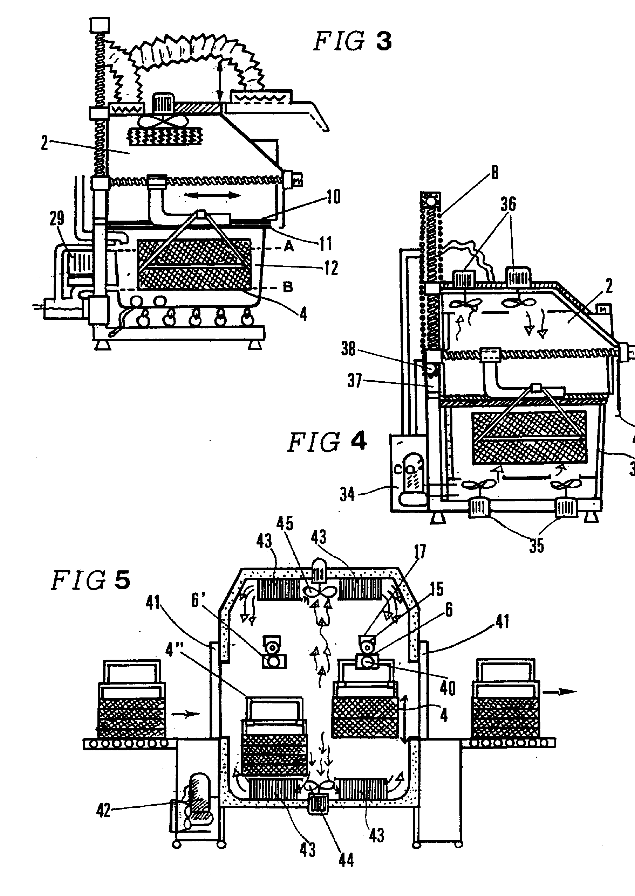

Sur la figure 3, le dispositif de cuisson est en position fermée, les joints 10 et 11 de la hotte-couvercle 2 et de la cuve 12 sont parfaitement jointés. La pompe motorisée 29, recycle l'eau de la cuve 12, un panier 4 est en cours de cuisson.

Sur la figure 4, le dispositif est fermé, et équipé en froid, avec du gaz Co2, 34, des turbines de ventilations 35 basse et 36 haute, font circuler l'air froid. Sur cette figure, le monte et baisse de la hotte-couvercle 2 s'effectue par une chaîne 8, asservie par un vérin électrique 37, ou sur un enrouleur 38. Le dispositif est entouré d'une isolation 39.

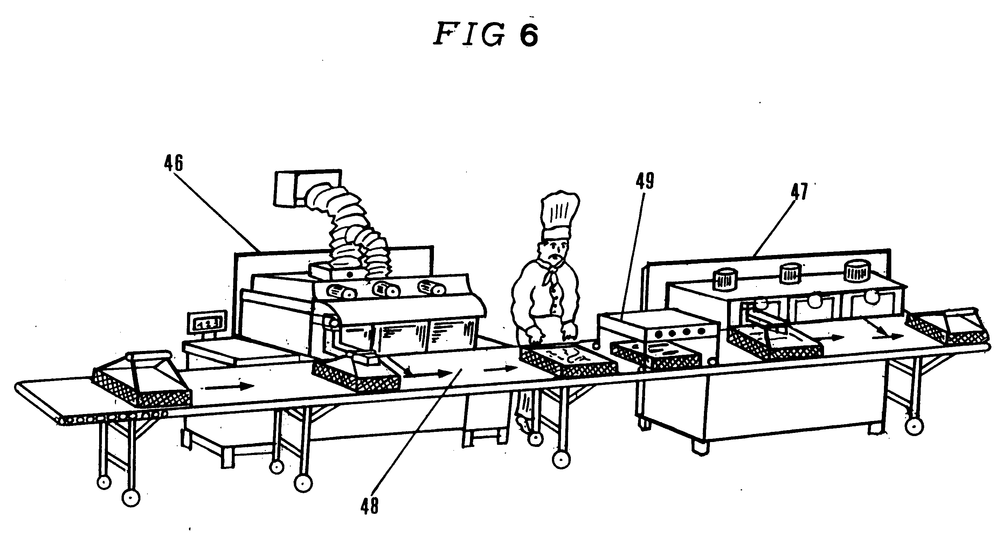

Sur la figure 5, le dispositif de froid est ouvert le bras robot 6 par un contacteur 40 est venu saisir le panier 4, et vient coulisser sur sa vis sans fin 15, motorisée 17. Une jupe coulissante, évite la perte de frigories pour continuer à refroidir le panier 4˝ qui n'a pas fini son temps de traitement, et dont le bras-robot 6′, n'a pas reçu par son contacteur, l'information de venir saisir. La réfrigération du dispositif de cette figure se faisant par un compresseur 42 et évaporateur 43. Des turbines 44 et 45 recyclent le froid par l'évaporateur 43. Sur le convoyeur 3, un panier attend son introduction, alors qu'un autre est évacué.

Sur la figure 6, deux modules, de cuisson 46, de réfrigération 47, et un convoyeur commun 48, forment la chaîne en continu. Une salamandre-grill 49, gratine les produits avant qu'ils soient introduits dans le dispositif de refroidissement.

## Revendications

1. Dispositif pour la cuisson ou le refroidissement d'aliments avec introduction et évacuation autonome de paniers contenant le produit à traiter, le dispositif comportant deux parties, une partie basse (1) abritant la zone de traitement (12) par le chaud ou le froid du produit, ladite zone de traitement étant susceptible de recevoir sensiblement côte à côte plusieurs paniers (4) de produits à traiter et une hotte-couvercle (2) apte à venir coiffer de manière jointive la partie basse (1); des moyens de déplacement en hauteur (8, 9, 37) de la hotte-couvercle (2) entre une position abaissée dans laquelle celle-ci coiffe la partie basse (1) et une position levée dans laquelle elle permet l'introduction vers l'intérieur ou l'évacuation vers l'extérieur des paniers (4) du dispositif de cuisson ou de refroidissement,
se caractérisant par le fait que la hotte-couvercle (2) est pourvue d'une jupe (41) périphérique coulissant jusqu'à la zone de traitement (12) pendant l'introduction ou l'évacuation des paniers (4) pour conserver les calories ou les frigories du dispositif de cuisson ou de refroidissement, plusieurs bras-robots (6), munis chacun de moyens de prise d'un panier, étant assujettis à des moyens de guidage (5) et de déplacement solidaires de la hotte couvercle (2) et conformés de manière à assurer la translation de chacun des bras-robots (6) entre une position dans laquelle le moyen de prise d'un panier (4) d'un bras-robot est susceptible, en position basse de la hotte-couvercle (2), de venir crocheter le panier (4) à évacuer de la zone de traitement (12), et une position extérieure au dispositif pour la cuisson ou le refroidissement d'aliments dans laquelle le bras-robot (6) effectue la prise ou la dépose du panier, le dispositif étant équipé de moyens de commande aptes à permettre la commande sélective de chacun des bras-robots en vue de l'évacuation sélective de chacun des paniers (4) disposés dans la zone de traitement au moyen du bras-robot (6) qui lui correspond.

2. Dispositif suivant la revendication 1, se caractérisant par le fait que les déplacements en hauteur de la hotte-couvercle (2) sont assurés grâce à un moyen électro-mécanique tel que vis sans fin (8) mue par un moteur (18), chaîne (9) entraînée par un enrouleur (38) ou vérin électrique (37).

3. Dispositif suivant l'une quelconque des revendications précédentes, se caractérisant par le fait que les moyens de déplacement et de guidage des bras-robots (6) sont constitués de vis sans fin (5), et que lesdits bras-robots (6) saisissent les paniers (4) sur un convoyeur (3) pour les introduire dans la zone de traitement (12), et les reprennent à la fin du traitement pour les évacuer sur le même convoyeur (3).

4. Dispositif suivant l'une quelconque des revendications précédentes, se caractérisant par le fait que la zone de traitement (12) comporte plusieurs cuves et que l'évacuation de chaque panier (4) est indépendante et fonction de la durée de traitement de son contenu, les bras-robots (6) étant pourvus de fourches équipées d'un contacteur (40) permettant de crocheter le panier (4) à évacuer, ou de le laisser terminer son temps de traitement.

5. Dispositif suivant l'une quelconque des revendications précédentes, se caractérisant par le fait que deux dispositifs de cuisson ou de refroidissement, l'un équipé pour la cuisson (46), l'autre pour le refroidissement (47) sont associé à un convoyeur commun (48) pour former une chaine en continu permettant de cuire et de refroidir immédiatement selon les lois en vigueur, une salamandre-grill (49), servant à gratiner les produits sortant du dispositif équipé pour la cuisson (46) avant de les introduire dans le dispositif équipé pour le refroidissement (47), étant disposée entre les deux dispositifs, sur le convoyeur commun (48).

6. Dispositif suivant l'une quelconque des revendications précédentes, se caractérisant par le fait que deux joints (10, 11), équipant respectivement la hotte-couvercle (2) et la périphérie de la partie basse (1) permettent aux deux parties d'être jointes hermétiquement pendant le traitement.

## Patentansprüche

1. Vorrichtung zum Garen oder Kühlen von Nahrungsmitteln mit autonomer Einführung und Entnahme von das zu behandelnde Produkt enthaltenden Körben, wobei die Vorrichtung aus zwei Teilen besteht, einem unteren Teil (1), in welchem sich der Bereich für die Warm- bzw. Kalt-Behandlung (12) des Produktes befindet, wobei der besagte Behandlungsbereich im wesentlichen mehrere Körbe (4) für zu behandelnde Produkte nebeneinander aufnehmen kann, und einer Abzugshaube (2), geeignet, den unteren Teil (1) auf dichtende Weise abzudecken sowie Mittel zur Hub- und Senkbewegung (8, 9, 37) der Abzugshaube (2) zwischen einer niederen Position in der sie den unteren Teil (1) abdeckt und einer hohen Position in der sie das Zuführen nach Innen bzw. die Entnahme nach Außen der Körbe (4) der Gar- oder Kühlvorrichtung ermöglicht,
dadurch gekennzeichnet, daß die Abzugshaube (2) ausgerüstet ist mit einem umgebenden Mantel (41) der während dem Einführen bzw. der Entnahme der Körbe (4) bis in den Behandlungsbereich (12) gleitet, um die Wärme- oder Kältekalorien der Gar- oder Kühlvorrichtung zu bewahren, mehreren Roboterarmen (6) jeweils versehen mit Aufnahmemitteln für einen Korb und an mit der Abzugshaube (2) kraftschlüssigen Führungs- und Bewegungsmitteln (5) und befestigt, ausgeführt um die Translation jedes Roboterarms (6) zwischen einer Position in welcher das Aufnahmemittel eines Korbes (4) eines Roboterarms in niederer Position der Abzugshaube (2) den aus dem Behandlungsbereich zu entnehmenden Korb (4) greifen kann und einer Position außerhalb der Gar- oder Kühlvorrichtung, in der der Roboterarm den Korb aufnimmt oder absetzt, wobei die Vorrichtung über Steuermittel verfügt, die geeignet sind die selektive Steuerung jedes Roboterarmes hinsichtlich der selektiven Entnahme jedes einzelnen in der Behandlungszone befindlichen Korbes (4) mit Hilfe des ihm zugehörigen Roboterarms (6) zu ermöglichen.

2. Vorrichtung nach Anspruch 1, dadurch gekennzeichnet, daß die Hubbewegungen der Abzugshaube (2) mit Hilfe eines elektro-magnetischen Mittels, wie eine durch einen Motor (18) angetriebene Förderschnecke (8), eine durch eine Trommel (38) angetriebene Förderkette (9) oder einen elektrischen Zylinder (37), gewährleistet sind.

3. Vorrichtung nach irgend einem der vorherigen Ansprüche, dadurch gekennzeichnet, daß die Bewegungs- und Führungsmittel der Roboterarme (6) aus Förderschnecken (5) bestehen und daß die besagten Roboterarme (6) die Körbe (4) auf einem Förderer (3) aufnehmen um sie in den Behandlungsbereich (12) einzufahren und sie am Ende der Behandlung wieder aufnehmen um sie auf dem selben Förderer (3) abzusetzen.

4. Vorrichtung nach irgend einem der vorherigen Ansprüche, dadurch gekennzeichnet, daß der Behandlungsbereich (12) über mehrere Kessel verfügt und daß die Entnahme für jeden Korb (4) unabhängig und in Bezug auf die Behandlungsdauer seines Inhalts erfolgen kann, wobei die Roboterarme (6) mit mit einem Kontaktschalter (40) versehenen Gabeln ausgerüstet sind, die erlauben den zu entnehmenden Korb (4) zu erfassen oder ihn die entsprechende Behandlungszeit beenden zu lassen.

5. Vorrichtung nach irgend einem der vorherigen Ansprüche, dadurch gekennzeichnet, daß zwei Gar- oder Kühlvorrichtungen, jeweils eine ausgerüstet zum Garen (46) und die andere zum Kühlen (47) einem gemeinsamen Förderer (48) zugeordnet sind, um eine kontinuierliche Einrichtung zu bilden, die erlaubt, den geltenden Gesetzen entsprechend sofort zu garen und zu kühlen, wobei ein Dauerbrand-Grill (49) zwischen den beiden Vorrichtungen auf dem gemeinsamen Förderer (48) angeordnet ist, welcher besagte Grill dazu dient, die aus der für das Garen ausgerüsteten Vorrichtung (46) kommenden Produkte zu überbacken bevor sie in die für die Kühlung ausgerüstete Vorrichtung (47) eingeführt werden.

6. Vorrichtung nach irgend einem der vorherigen Ansprüche, dadurch gekennzeichnet, daß zwei Dichtungen (10, 11) jeweils an der Abzugshaube (2) und auf dem Umfang des unteren Teils (1) angeordnet sind, die erlauben die beiden Teile während der Behandlung hermetisch miteinander zu verbinden.

## Claims

1. Device for cooking or cooling foodstuff through autonomous introduction and removal of trays containing the product to be treated, the device having two parts, a lower part (1) housing the zone for processing (12) by heating or cooling the product, the said processing zone being susceptible to receive several trays (4) of products to be heated roughly side by side and a cover-hood (2) which caps and provides a joining with the lower part (1); the means (8, 9, 37) for moving the cover-hood (2) upwards between a lower position at which it caps the lower part (1) and an upper position at which it allows introduction or removal of trays (4), from the cooking or cooling device,
characterized by the fact that the cover-hood (2) is equipped with a surrounding skirt (41) sliding up to the processing zone (12) during the introduction or removal of trays (4) in order to conserve the heat or cold of the cooking or cooling devices, several robot arms (6) each equipped with the means to grasp a tray, and associated with the means for guidance (5) and movement as an integral part of the cover-hood (2) and conformed so as to ensure movement of each robot arm (6) between a position in which the means for grasping a tray (4) of a robot arm may, in the cover-hood lower position (2), hook onto the tray (4) to be removed from the processing zone (12), and a position outside of the foodstuff cooking and cooling device in which the robot arm (6) grasps or removes the tray, the device being fitted with the means of control capable of allowing selective control of each of the robot arms with a view to selective removal of each of the trays (4) arranged in the processing zone using the robot arm (6) which corresponds thereto.

2. Device as per claim 1 characterized by the fact that the cover-hood (2) is moved upwards through electro-mechanical means such as worm screw (8) driven by a motor (18), chain (9) driven by a winding device (38) or electric-driven hydraulic cylinder (37).

3. Device as per any one of the aforesaid claims, characterized by the fact that the means of displacement and guidance of the robot arms (6) consist of a worm screw (5) and that the said robot arms (6) grasp the tray (4) on a conveyor (3) in order to introduce them into the processing zone (12) and collect them at the end of processing to remove them on the same conveyor (3).

4. Device as per any one of the aforesaid claims characterized by the fact that the processing zone (12) has several vessels and that the removal of each tray (4) takes place separately and related to the duration of processing of its content, the robot arms (6) being fitted with forks equipped with a contact switch (40) allowing the tray (4) to be removed to be hooked up, or to terminate its processing time.

5. Device as per any one of the aforesaid claims characterized by the fact that two heating or cooling devices, one equipped for cooking (46), the other for cooling (47), are associated with a common conveyor (48) to form a continuous chain allowing immediate cooling and heating as per the laws in force, a browning salamander (49) used to grill the products leaving the device equipped for cooking (46) before introducing them into the device equipped for cooling (47), are arranged between the two devices on the common conveyor (48).

6. Device as per any one of the aforesaid claims characterized by the fact that two joints (10, 11), equipping respectively the coverhood (2) and the surround of the lower part (1) allow the two parts to be hermetically sealed during processing.
